# FASCICULE DE BREVET EUROPEEN

(11) **EP 3 637 266 B1**
(45) Date de publication et mention de la délivrance du brevet: **23.06.2021**
(21) Numéro de dépôt: 19201335.7
(22) Date de dépôt: 03.10.2019
(51) Int. Cl.: G06F 12/14, G06F 21/79

(54) **PROCÉDÉ D'ACCÈS À UNE MÉMOIRE**
ZUGANGSVERFAHREN ZU EINEM SPEICHER
METHOD FOR ACCESSING A MEMORY

(30) Priorité: 09.10.2018 FR 1871152
(43) Date de publication de la demande: 15.04.2020
(73) Titulaire: STMicroelectronics (Grenoble 2) SAS, 38000 Grenoble (FR); STMicroelectronics (Rousset) SAS, 13790 Rousset (FR)
(72) Inventeur: Daineche, Layachi, 13320 BOUC-BEL-AIR (FR); Chbani, Xavier, 38000 GRENOBLE (FR); Van-Den-Bossche, Nadia, 38240 MEYLAN (FR)
(74) Mandataire: Cabinet Beaumont

(56) Documents cités:
- EP-A2- 2 637 124
- US-A1- 2016 299 720

## Description

### Domaine technique

La présente description concerne de façon générale le domaine des circuits électroniques, et plus particulièrement le domaine des microcontrôleurs.

### Technique antérieure

On connaît des microcontrôleurs comprenant des mémoires non volatiles dans lesquelles sont stockés un ou plusieurs programmes d'applications qui, lorsqu'ils sont lus et exécutés par un microprocesseur du microcontrôleur, entraînent la mise en oeuvre des applications correspondantes. Le document EP 2 637 124 A2 décrit un module de contrôle de censure pour une mémoire non volatile. Le document US 2016/299720 A1 divulgue un mémoire flash pourvue d'une région de configuration de protection.

### Résumé de l'invention

Il existe un besoin de contrôler l'accès à des zones d'une mémoire non volatile d'un microcontrôleur, par exemple pour empêcher l'accès à des informations confidentielles stockées dans la mémoire.

Il existe en outre un besoin de permettre le développement d'un programme d'une application en utilisant des outils permettant d'identifier des disfonctionnements de l'application lorsque le programme est exécuté par un microcontrôleur, tout en maintenant la confidentialité de certaines zones d'une mémoire non volatile du microcontrôleur.

Un mode de réalisation pallie tout ou partie des inconvénients des procédés connus d'accès à une mémoire, en particulier à une mémoire non volatile d'un microcontrôleur.

La présente invention est définie par les revendications indépendantes jointes auxquelles il convient de de se référer. Des caractéristiques avantageuses sont exposées dans les revendications dépendantes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un microcontrôleur ;
la figure 2 représente, de façon schématique, un mode de réalisation d'une mémoire non volatile du microcontrôleur de la figure 1 ;
la figure 3 illustre, sous forme de blocs, un mode de réalisation d'un procédé d'accès à des zones de la mémoire de la figure 2 ; et
la figure 4 représente, de façon schématique et sous forme de blocs, un autre mode de réalisation du microcontrôleur de la figure 1 dans lequel est mise en oeuvre une variante de réalisation du procédé de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers circuits ou éléments constitutifs d'un microcontrôleur et le fonctionnement d'un microcontrôleur n'ont pas été décrits en détail, les modes de réalisation décrits étant compatibles avec les microcontrôleurs usuels et leurs fonctionnements.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

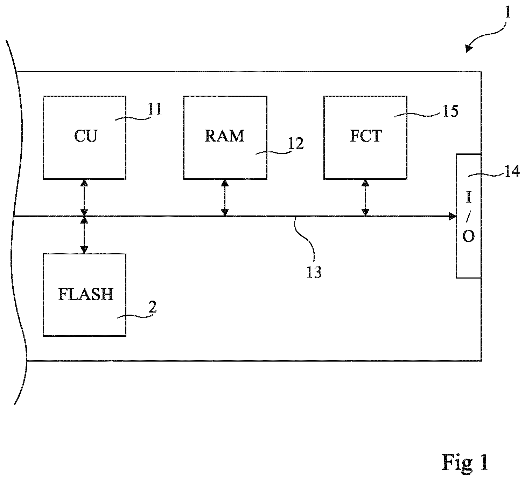

La figure 1 représente, de façon très schématique et sous forme de blocs, un mode de réalisation d'un microcontrôleur 1 du type auquel s'appliquent, à titre d'exemple, les modes de réalisation qui vont être décrits.

Le microcontrôleur 1 comporte :
- un microprocesseur 11 (CU) ;
- une ou plusieurs zones 12 (RAM) de stockage volatile, par exemple de type mémoire RAM ou registres, pour stocker temporairement des informations (instructions, adresses, données) ;
- une ou plusieurs zones de stockage non volatile, dont au moins une mémoire 2 de type flash (FLASH), pour stocker des informations quand le microcontrôleur n'est pas alimenté ;
- un ou plusieurs bus de données, d'adresses et/ou de commandes entre les différents éléments internes au microcontrôleur 1, ces divers bus étant ici représentés sous la forme d'un unique bus 13 ; et
- une ou plusieurs interfaces d'entrée-sortie 14 (I/O) de communication avec l'extérieur du microcontrôleur 1.

Par ailleurs, le microcontrôleur 1 peut intégrer d'autres fonctions, symbolisées par un bloc 15 (FCT), par exemple un crypto-processeur, d'autres interfaces, d'autres mémoires, etc.

La mémoire flash 2 est destinée à stocker un programme initial, ou programme de démarrage (boot). Un programme de démarrage est le premier programme lu et exécuté par le microprocesseur 11 au démarrage (boot) du microcontrôleur 1, c'est-à-dire lorsque le microcontrôleur 1 est mis sous tension ou réinitialisé (reboot). La mémoire flash 2 est en outre destinée à stocker au moins un programme d'une application dite logicielle.

On appelle ici programme d'une application logicielle une succession d'instructions qui, lorsqu'elles sont lues et exécutées par le microprocesseur 11, permettent la mise en oeuvre de l'application. Selon un exemple particulier de réalisation, la fonction de l'application est un filtre à réponse impulsionnelle finie.

On appelle ici "débuggeur" un outil de recherche des disfonctionnements d'une application logicielle dont le programme est lu et exécuté par un microcontrôleur, par exemple le microcontrôleur 1. Plus particulièrement, un débuggeur permet une exécution pas à pas du programme de l'application, par exemple stockée dans la mémoire flash 2 du microcontrôleur 1, l'affichage et éventuellement la modification de variables du programme, etc. Certains débuggeurs permettent même d'accéder aux contenus de registres internes du microprocesseur 11, à des mémoires du microcontrôleur 1 et/ou à des registres du microcontrôleur 1, par exemple des registres de programmation des fonctions du microcontrôleur.

On considère, à titre d'exemple, le cas où un programme d'une première application est stocké dans la mémoire flash 2, cette première application ayant été développée par une première entité, par exemple un développeur, une entreprise, un vendeur de microcontrôleur, etc. Le microcontrôleur 1 est ensuite fourni à une deuxième entité, par exemple un autre développeur, une autre entreprise, un utilisateur, etc. Cette deuxième entité peut souhaiter développer un programme d'une deuxième application en vue de le stocker dans la mémoire flash 2 pour mettre en oeuvre la deuxième application au moyen du microcontrôleur. Lors du développement du programme de la deuxième application, la deuxième entité peut recourir à un débuggeur. L'utilisation d'un débuggeur est considérée comme une intrusion susceptible de permettre l'accès, par la deuxième entité, à des informations sur le programme de la première application. Or, dans certains cas, il est souhaitable que la deuxième entité ne puisse pas accéder à des informations sur la première application déjà programmée, ou installée, dans la mémoire 2, notamment en utilisant un débuggeur. Une autre intrusion susceptible de permettre l'accès à des informations sur le programme de la première application est l'exécution d'un programme de démarrage provenant de l'extérieur, par exemple exécuté depuis la mémoire RAM 12.

De préférence, le microcontrôleur 1 est configuré pour détecter ces intrusions.

A titre d'exemple, une intrusion correspondant à la connexion d'un débuggeur au microcontrôleur 1 peut être détectée par un circuit de détection du microcontrôleur. Ce circuit peut alors modifier la valeur d'un drapeau (flag) d'intrusion, par exemple un bit de contrôle du bus 13, accessible à au moins certains éléments du microcontrôleur 1, et en particulier à la mémoire flash 2, pour avertir ces éléments de la connexion du débuggeur. A titre d'exemple, un tel circuit de détection est prévu dans chaque interface 14 du microcontrôleur 1 à laquelle peut être connecté un débuggeur, par exemple une interface 14 de bus JTAG (Join Test Action Group) ou de bus SWD (Serial Wire Debug) et, plus généralement, une interface de bus permettant de mettre en oeuvre des techniques dites de scrutation, ou de balayage, des limites (boundary scan).

A titre d'exemple, une intrusion correspondant à l'exécution d'un programme de démarrage autre que celui stocké dans la mémoire 2 peut être détectée par le microcontrôleur 1 et une indication de la détection de cette intrusion peut être fournie à la mémoire flash 2. En effet, l'adresse à laquelle est stocké le programme de démarrage que le microprocesseur doit exécuter est fournie par des options stockées dans la mémoire 2, ces options étant analysées lors du démarrage (boot) du microcontrôleur 1 par un circuit de contrôle de démarrage (boot controller - non représenté en figure 1). Le circuit de contrôle de démarrage est de préférence configurable pour autoriser ou non l'exécution d'un programme de démarrage en fonction de l'adresse où ce programme est stocké.

Bien que cela ne soit pas représenté en figure 1, le microcontrôleur 1 est ici partitionné en deux environnements, à savoir un environnement sécurisé (Secure World-SW) et un environnement non sécurisé (Non Secure World-NSW). Un programme ou un circuit appartenant à l'environnement sécurisé SW peut accéder, en lecture, en écriture et en exécution, à des adresses de l'environnement sécurisé SW et optionnellement de l'environnement non sécurisé NSW. En revanche, un programme ou un circuit appartenant à l'environnement non sécurisé NSW ne peut accéder, en lecture, en écriture et en exécution, qu'à des adresses appartenant à l'environnement non sécurisé NSW. Plus précisément, dans le microcontrôleur 1, lors d'un accès en lecture, en écriture ou en exécution à une adresse, le bus 13 comprend une indication du caractère, ou type, sécurisé (SA-Secure Access) ou non sécurisé (NSA-Non Secure Access) de cet accès. Un accès sécurisé SA est par exemple demandé ou initié par un programme ou un circuit de l'environnement sécurisé SW, et un accès non sécurisé NSA est par exemple demandé ou initié par un programme ou un circuit de l'environnement non sécurisé NSW. A titre d'exemple, le partitionnement du microcontrôleur 1 en deux environnements SW et NSW peut être mis en oeuvre au moyen de la technologie désignée sous l'appellation commerciale TrustZone.

Lorsqu'un débuggeur est connecté au microcontrôleur 1, il peut initier, depuis l'extérieur du microcontrôleur, un accès de type SA ou NSA à une adresse interne du microcontrôleur, cette demande d'accès étant par exemple reçue par l'interface 14 à laquelle est connecté le débuggeur, qui est ensuite censée transmettre cette demande d'accès au bus 13 du microcontrôleur.

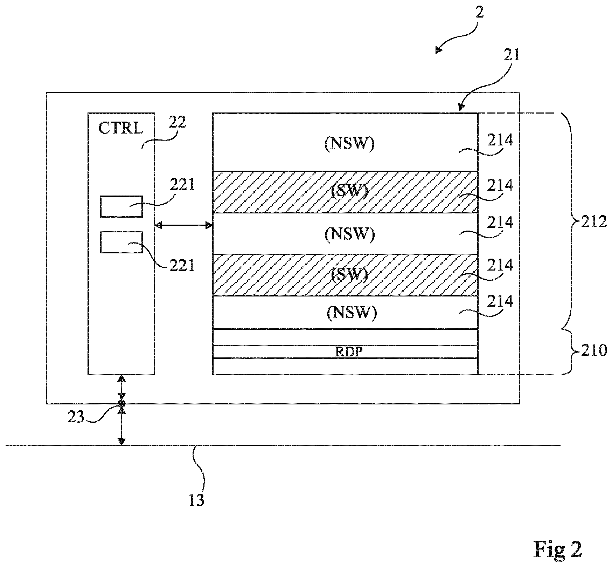

La figure 2 représente, de façon schématique, un mode de réalisation de la mémoire flash 2 du microcontrôleur de la figure 1.

La mémoire 2 comprend un espace de stockage, ou espace mémoire, non volatile 21, par exemple constitué d'une pluralité de mots mémoire adressables. La mémoire 2 comprend en outre un circuit d'interface 22 (CTRL) configuré pour contrôler les accès en lecture, en écriture et en exécution à l'espace mémoire 21.

L'espace mémoire 21 est divisé, ou partitionné, en plusieurs parties, deux parties 210 et 212 dans cet exemple. La partie 210 est destinée à stocker des informations de configuration de la mémoire 2. La partie 212 est destinée à stocker des programmes d'applications logicielles. Chaque partie 210, 212 de l'espace mémoire 21 est définie et/ou identifiée par des paramètres tels que son adresse de début, sa taille, c'est-à-dire son nombre de mots mémoire, et/ou son adresse de fin. Des informations représentatives de ces paramètres sont stockées de manière non volatile dans la mémoire 2, de préférence dans sa partie 210.

A titre d'exemple, le programme de démarrage du microcontrôleur 1 est stocké dans la partie 212 de l'espace mémoire 21. En variante, l'espace mémoire 21 peut comprendre une troisième partie réservée au stockage du programme de démarrage du microcontrôleur 1.

Dans ce mode de réalisation, la partie 212 de l'espace mémoire 21 est divisée, ou partitionnée, en plusieurs secteurs ou zones 214. De préférence, chaque zone 214 comprend, ou correspond à, plusieurs mots mémoire. Autrement dit, chaque zone 214 correspond à plusieurs adresses, de préférence successives. Chaque zone 214 est définie et/ou identifiée par des paramètres tels que son adresse de début, sa taille et/ou son adresse de fin. Des informations représentatives de ces paramètres sont stockées de manière non volatile dans la mémoire 2, de préférence dans sa partie 210.

Dans ce mode de réalisation, les zones 214 appartiennent aux environnements respectivement sécurisé SW ou non sécurisé NSW. Ainsi, chaque zone 214 peut être d'un premier type, SW, ou d'un deuxième type, NSW, les zones 214 de type SW étant hachurées en figure 2. Une information représentative du caractère sécurisé SW ou non sécurisé NSW de chaque zone 214 est stockée de manière non volatile dans la mémoire 2, de préférence dans sa partie 210. De préférence, dans un état initial de la mémoire 2, c'est-à-dire quand la mémoire 2 est vierge, elle ne contient que des zones 214 de type sécurisé SW.

A titre d'exemple, on prévoit ici que des programmes d'applications sécurisées soient stockés dans des zones 214 de type SW et appartiennent donc à l'environnement sécurisé SW du microcontrôleur 1, et que des programmes d'applications non sécurisées, ou publiques, soient stockés dans des zones 214 de type NSW et appartiennent donc à l'environnement non sécurisé NSW du microcontrôleur 1.

Dans ce mode de réalisation, la valeur d'une variable RDP (Read Out Protection) est choisie parmi au moins quatre valeurs, de préférence parmi quatre valeurs. Une information représentative de la valeur de la variable RDP est stockée de manière non volatile dans la mémoire 2, de préférence dans sa partie 210 comme cela est représenté en figure 2.

Le circuit 22 de la mémoire 2 est par exemple connecté entre l'espace de stockage 21 et des entrées/sorties 23 de la mémoire 2, les entrées/sorties 23 étant destinées à être connectées au bus 13 comme cela est représenté en figure 2.

Lorsqu'un accès à une zone 214 est requis par le bus 13, le circuit 22 conditionne l'accès à cette zone 214 en fonction de la valeur de la variable RDP, en fonction du type SW ou NSW de la zone 214, en fonction du caractère sécurisé SA ou non sécurisé NSA de l'accès et/ou, le cas échéant, en fonction de la détection ou non d'une intrusion et/ou du fait que l'accès ait ou non été initié par un débuggeur.

De préférence, le circuit 22 contrôle également la programmation, ou stockage, dans la mémoire 2, des informations sur la configuration de la mémoire 2, ces informations étant représentatives du partitionnement de l'espace mémoire 21 en parties 210 et 212, de la division de la partie 212 en zones 214, du type SW ou NSW de chaque zone 214 et/ou de la valeur de la variable RDP. De préférence, la modification du type SW ou NSW d'une zone 214 ne peut être réalisée qu'au moyen d'un accès sécurisé SA du bus 13 à la mémoire 2. A titre d'exemple, la modification de la valeur RDP peut être réalisée au moyen d'un accès sécurisé SA ou d'un accès non sécurisé NSA du bus 13 à la mémoire 2.

Dans cet exemple, le circuit 22 comprend un ou plusieurs registres 221 de stockage volatile, deux registres 221 étant représentés en figure 2. Ces registres 221 sont destinés à stocker des informations sur la configuration de la mémoire 2 après que le circuit 22 les ait lues dans l'espace mémoire 21.

En variante, le circuit 22 comprend un ou plusieurs circuits de stockage non volatile dans lesquels sont stockées les informations représentatives du partitionnement de l'espace mémoire 21 en parties 210 et 212, de la division de la partie 212 en zones 214, du type SW ou NSW de chaque zone 214 et/ou de la valeur de la variable RDP. Dans ce cas, ces informations peuvent ne pas être stockées dans l'espace mémoire 21.

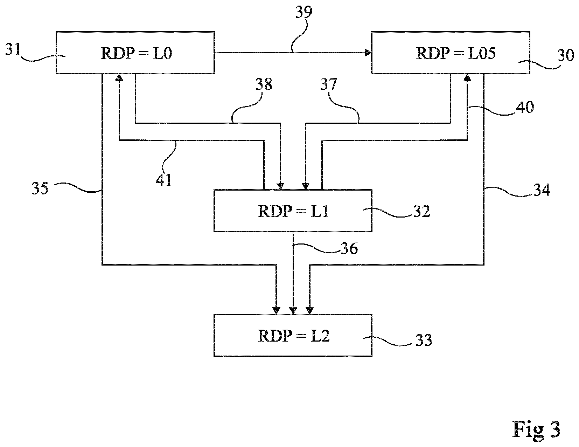

La façon dont le circuit 22 conditionne l'accès à une zone 214 en fonction de son type SW ou NSW, en fonction de la valeur de la variable RDP et/ou en fonction du type SA ou NSA de l'accès va maintenant être décrite plus en détail en relation avec la figure 3.

La figure 3 illustre, sous forme de blocs, un mode de réalisation d'un procédé de gestion du cycle de vie du microcontrôleur, déterminant par exemple le contrôle d'accès à des zones 214 de la mémoire 2 de la figure 2, le circuit 22 étant de préférence configuré pour mettre en oeuvre ce procédé.

Dans cet exemple, la valeur de la variable RDP est choisie parmi quatre valeurs L0, L05, L1 et L2. Le procédé comprend alors quatre états 30 (bloc RDP=L05), 31 (bloc RDP=L0), 32 (bloc RDP=L1) et 33 (bloc RDP=L2) correspondant aux cas où la valeur de la variable RDP est respectivement L05, L0, L1 et L2.

Quel que soit l'état 30, 31, 32 ou 33, un accès non sécurisé NSA à une zone sécurisée SW est interdit, par exemple refusé par le circuit 22.

Dans l'état 30, l'accès, même sécurisé SA, à une zone sécurisée SW est interdit lorsqu'il provient d'un débuggeur connecté au microcontrôleur 1. Toutefois, l'accès sécurisé SA à une zone sécurisée SW est autorisé si il ne provient pas d'un débuggeur. En outre, l'accès à une zone NSW est autorisé, que cet accès soit sécurisé SA ou non sécurisé NSA, et qu'il provienne ou non d'un débuggeur connecté au microcontrôleur 1.

Ainsi, dans l'état 30, un débuggeur ne peut accéder qu'aux zones de type NSW. Il est alors possible d'identifier, à l'aide du débuggeur, les disfonctionnements d'une application logicielle dont le programme est stocké dans une zone 214 non sécurisée NSW, tout en maintenant sécurisée une autre application logicielle dont le programme est stocké dans une zone 214 sécurisée SW.

A titre d'exemple, dans l'état 30, l'interface 14 à laquelle est connecté le débuggeur est configurée, par exemple suite à la lecture de la valeur de la variable RDP, pour ne transmettre au bus 13 aucun des accès de type SA initiés depuis l'extérieur du microcontrôleur 1 par le débuggeur. Ainsi, aucun des accès sécurisés SA que voit le circuit 22 ne peut provenir du débuggeur.

Dans l'état 31, l'accès sécurisé SA à une zone sécurisée SW est autorisé, par exemple par le circuit 22, même si il provient d'un débuggeur connecté au microcontrôleur 1. En outre, l'accès à une zone non sécurisée NSW est autorisé, par exemple par le circuit 22, que cet accès soit sécurisé SA ou non sécurisé NSA, et qu'il provienne ou non du débuggeur. Autrement dit, dans l'état 31, le débuggeur peut accéder à toutes les zones 214 de la mémoire 2.

A titre d'exemple, dans l'état 31, l'interface 14 à laquelle est connecté le débuggeur est configurée, par exemple suite à la lecture de la valeur de la variable RDP, pour transmettre au bus 13 tous les accès initiés depuis l'extérieur du microcontrôleur 1 par le débuggeur, que ces accès soient sécurisés SA ou non sécurisés NSA. Le débuggeur doit tout de même initier le bon accès, c'est-à-dire un accès sécurisé SA pour accéder à une zone sécurisée SW, et un accès sécurisé SA ou non sécurisé NSA pour accéder à une zone non sécurisée NSW, le débuggeur étant configuré pour gérer le type SA ou NSA d'accès qu'il initie.

Dans l'état 32, lorsqu'une intrusion est détectée, par exemple la connexion d'un débuggeur au microcontrôleur 1, aucun accès (sécurisé SA ou non sécurisé NSA) aux zones 214 de type SW et de type NSW n'est autorisé par le circuit 22. En revanche, si aucune intrusion n'est détectée, des accès sécurisés SA à des zones 214 de type SW et optionnellement de type NSW sont autorisés, et des accès non sécurisés NSA ne sont autorisés qu'à des zones non sécurisées NSW. Ainsi, dans l'état 32, la détection d'une intrusion, en particulier la connexion d'un débuggeur au microcontrôleur, entraîne que la mémoire 2 n'est plus accessible, ce qui permet de protéger son contenu. En revanche, en l'absence de connexion d'un débuggeur, les applications programmées sur le microcontrôleur peuvent être exécutées, en respectant le partitionnement entre les environnements sécurisé SW et non sécurisé NSW du microcontrôleur.

De préférence, dans l'état 32, le microcontrôleur 1, et plus précisément son circuit de contrôle de démarrage (boot controller), est configuré, par exemple suite à la lecture de la valeur de la variable RDP, pour empêcher l'exécution d'un programme de démarrage autre que celui qui est stocké dans la mémoire 2.

Dans l'état 33, la connexion d'un débuggeur au microcontrôleur 1 est désactivée, par exemple en bloquant, de préférence de manière définitive, l'accès aux bus du microcontrôleur 1 qui peuvent être utilisés par le débuggeur. A titre d'exemple, cela est mis en oeuvre au niveau de chaque interface 14 associée à un bus permettant l'exécution d'un débuggeur en désactivant, à titre d'exemple, l'horloge de ces interfaces, lorsque la valeur de la variable RDP est L2. En outre, l'exécution d'un programme de démarrage depuis une autre source que la mémoire flash 2 est également désactivée, par exemple par le circuit de contrôle de démarrage du microcontrôleur 1 qui ne transmet alors au microcontrôleur 1 que l'adresse du programme de démarrage stocké dans la mémoire 2. De plus, dans l'état 33, un accès sécurisé SA à une zone 214 de type SW ou optionnellement NSW est autorisé, et un accès non sécurisé NSA à une zone 214 de type NSW ou de type SW est respectivement autorisé et interdit.

Selon le procédé décrit, seuls certains changements, ou reprogrammation, de la valeur de la variable RDP par le circuit 22 sont autorisés, un changement de la valeur de la variable RDP entraînant un changement correspondant d'état après remise à zéro du produit.

En particulier, dans ce mode de réalisation, des changements de l'état 30, 31 et 32 à l'état 33 (figure 3, flèches respectives 34, 35 et 36) sont autorisés. En revanche, les changements de l'état 33 à l'un quelconque des états 30, 31 et 32 sont interdits. L'état 33 est donc un état irréversible, ou, autrement dit, définitif. En outre, un changement de l'état 30 ou 31 à l'état 32 (figure 3, flèches respectives 37 et 38), ou de l'état 31 à l'état 30 (figure 3, flèche 39) est autorisé.

Dans ce mode de réalisation, un changement de l'état 32 à l'état 30 (figure 3, flèche 40) est également autorisé et entraîne l'effacement de toutes les zones 214 non sécurisées NSW. Ainsi, lorsqu'un programme stocké dans une zone 214 de type SW a été exécuté dans l'état 32, un tel changement d'état entraîne l'effacement d'éventuelles données et/ou instructions stockées dans une zone 214 non sécurisée NSW suite à la transition vers l'état 30. Cela permet d'éviter que ces données ne puissent être lues par un débuggeur dans l'état 30, les accès d'un débuggeur à des zones 214 non sécurisées NSW étant autorisés dans l'état 30.

Dans l'exemple représenté, un changement de l'état 32 à l'état 31 (figure 3, flèche 41) est autorisé et entraîne l'effacement de toutes les zones 214. Cela permet d'éviter qu'un programme stocké dans une zone 214 sécurisée SW ne devienne accessible à un débuggeur connecté au microcontrôleur 1, les accès d'un débuggeur à des zones 214 sécurisées SW étant autorisés dans l'état 31.

Dans une variante de réalisation non illustrée, un changement de l'état 30 à l'état 31 est autorisé et entraîne l'effacement de toutes les zones 214.

Dans le procédé ci-dessus, lorsqu'un accès en lecture ou en écriture à une zone 214 est requis alors que cet accès est interdit, le circuit 22 peut générer un signal d'erreur sur le bus 13, entraînant optionnellement l'interruption du programme en cours d'exécution.

Le procédé décrit pour contrôler l'accès à des zones 214 selon la valeur de la variable RDP, selon le type NSW ou SW des zones, selon le caractère sécurisé SA ou non sécurisé NSA de l'accès, et/ou, le cas échéant selon la détection ou non d'une intrusion et/ou selon la provenance de l'accès, à savoir si l'accès a été ou non initié par un débuggeur connecté au microcontrôleur 1, peut être étendu pour contrôler les accès en lecture, en écriture et/ou en exécution dans l'ensemble du microcontrôleur 1. En effet, du point de vue du microprocesseur 11, tous les éléments du microcontrôleur 1 qui sont connectés au bus 13 sont vus comme des adresses qui peuvent appartenir aux environnements respectivement sécurisé SW et non sécurisé NSW. On propose ici de répartir les adresses vues par le microprocesseur 11 en adresses de type, ou catégorie, SW et en adresses de type, ou catégorie, NSW. L'accès à ces adresses est ensuite conditionné en fonction de la valeur de la variable RDP, de leurs catégories SW et NSW, du caractère sécurisé SA ou non sécurisé NSA de l'accès, et/ou, le cas échéant, de la détection ou non d'une intrusion et/ou de la provenance de l'accès (débuggeur ou non).

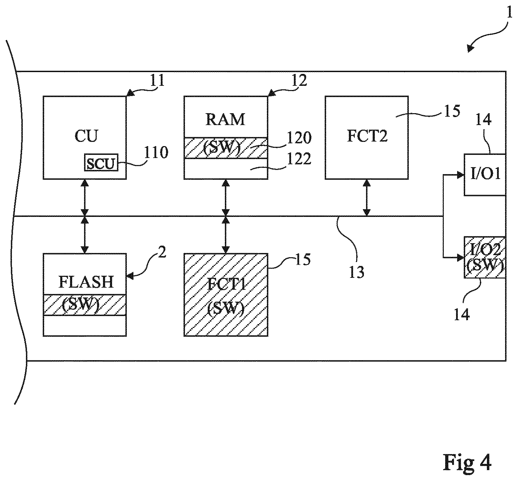

La figure 4 représente, de façon schématique et sous forme de blocs, un autre mode de réalisation du microcontrôleur 1 de la figure 1 dans lequel est mise en oeuvre une variante de réalisation du procédé de la figure 3.

Par rapport au microcontrôleur représenté en figure 1, deux interfaces 14 I/O1 et I/O2 du microcontrôleur 1 ont été représentées et deux fonctions FCT1 et FCT2 du microcontrôleur 1 ont été représentées (blocs 15). En outre, un circuit de contrôle d'accès 110 (bloc SCU - Security Control Unit) du microprocesseur 11 a été représenté. Le circuit 110 comprend au moins un circuit de mémorisation (non représenté), par exemple des registres ou une mémoire volatile.

La mémoire flash 2 est du type de celle décrite en relation avec la figure 2 et met en oeuvre le procédé décrit en relation avec la figure 3.

Dans l'exemple représenté, les adresses vues par le microprocesseur 11, et en particulier par son circuit 110, qui correspondent à la fonction FCT1, à l'interface I/O2, à une partie 120 de la mémoire RAM 12 et aux zones 214 de type SW de la mémoire flash 2, sont des adresses sécurisées SW et sont symbolisées par des hachures en figure 4, les autres adresses, en particulier celles correspondant aux autres parties 122 de la mémoire RAM 12, étant des adresses non sécurisées NSW.

Le circuit 110 est configuré pour enregistrer, dans son circuit de mémorisation, la catégorie SW ou NSW de chaque adresse vue par le microprocesseur 11. Ce circuit est par exemple configuré par l'exécution du programme de démarrage stocké dans la mémoire 2, le programme de démarrage lui fournissant le partitionnement du microcontrôleur 1 en environnements sécurisé SW et non sécurisé NSW.

Lorsque le procédé d'accès aux zones 214 de la mémoire flash 2 est mis en oeuvre par le circuit 22 de la mémoire flash 2 (figure 2), le circuit 110 est configuré pour :
- conditionner les accès aux adresses sécurisées SW et non sécurisées NSW de la même façon que le circuit 22 conditionne les accès aux zones 214 respectivement sécurisées SW et non sécurisées NSW ;
- conditionner le basculement d'une adresse non sécurisée NSW en adresse sécurisée SW et d'une adresse sécurisée SW en adresse non sécurisée NSW de la même façon que le circuit 22 conditionne le basculement respectivement d'une zone non sécurisée NSW en zone sécurisée SW et d'une zone sécurisée SW en zone non sécurisée NSW ; et
- effacer le contenu d'adresses sécurisées SW et d'adresses non sécurisées NSW de la même manière que circuit 22 efface le contenu respectivement de zones 214 sécurisées SW et de zones 214 non sécurisées NSW.

De préférence, lors du passage de l'état 32 à 30 (flèche 40 en figure 3), c'est-à-dire lors d'un changement de la valeur de la variable RDP de la valeur L1 à la valeur L05, on prévoit en outre un effacement de toutes les mémoires non volatiles du microcontrôleur et/ou un redémarrage (reboot) du microcontrôleur.

La mise en oeuvre d'un tel procédé permet de sécuriser, au niveau de l'ensemble du microcontrôleur 1, un programme stocké dans une zone 214 sécurisée SW de la mémoire flash 2.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, l'homme du métier est en mesure de mettre en oeuvre les procédés décrits ci-dessus dans le cas plus général où le débuggeur est remplacé par n'importe quel programme ou circuit externe au microcontrôleur 1 qui demande des accès à des zones 214 ou des adresses internes du microcontrôleur 1.

Enfin, la mise en oeuvre pratique des modes de réalisation et variantes décrits est à la portée de l'homme du métier à partir des indications fonctionnelles données ci-dessus. En particulier, bien que cela n'ait pas été décrit, les demandes de reprogrammation de la valeur de la variable RDP et/ou de reprogrammation du type d'une zone 214 sont reçues par la mémoire 2 par l'intermédiaire du bus 13. A titre d'exemple, le changement, ou reprogrammation, de la valeur de la variable RDP est demandé soit par le code utilisateur exécuté par le microcontrôleur 1, soit depuis l'extérieur du microcontrôleur 1, par l'intermédiaire d'une interface 14, par exemple l'interface à laquelle est connecté le débuggeur dite interface de debug. En revanche, de préférence, le changement, ou reprogrammation, du type SW ou NSW d'une zone de la mémoire 2, ne peut être demandé que par l'intermédiaire d'un accès sécurisé à la mémoire, et pourra, si cette action émane d'un débuggeur, dépendre de la valeur de la variable RDP.

## Revendications

1. Procédé comprenant les étapes suivantes :
- stocker, dans une mémoire non volatile (2) d'un microcontrôleur (1), une première information représentative d'une valeur (RDP) choisie parmi au moins quatre valeurs (L0, L05, L1, L2), et, pour chacune de plusieurs zones (214) de la mémoire, une deuxième information représentative d'un type choisi parmi deux types (SW, NSW), un premier (NSW) des deux types (SW, NSW) indiquant que la zone (214) appartient à un environnement non sécurisé du microcontrôleur et un deuxième (SW) des deux types (SW, NSW) indiquant que la zone appartient à un environnement sécurisé du microcontrôleur ; et
- conditionner l'accès à chacune desdites zones en fonction de la valeur choisie et du type de la zone,
dans lequel l'accès à chacune desdites zones (214) est en outre conditionné par le fait que l'accès est initié par un débuggeur connecté au microcontrôleur (1),
dans lequel l'accès aux zones (214) du premier type (NSW) est autorisé et l'accès aux zones (214) du deuxième type (SW) est interdit quand la valeur choisie est une première valeur (L05) et que l'accès est initié par le débuggeur connecté au microcontrôleur (1),
dans lequel l'accès aux zones (214) des premier et deuxième types (NSW, SW) est autorisé quand la valeur choisie est une deuxième valeur (L0),
dans lequel un changement de la valeur choisie de la première valeur (L05) vers la deuxième valeur (L0) est interdit ou entraîne l'effacement de chacune desdites zones (214),
dans lequel l'accès à chacune desdites zones (214) est en outre conditionné par une détection d'une intrusion quand la valeur choisie est une troisième valeur (L1), et
dans lequel un changement (40) de la valeur choisie de la troisième valeur (L1) vers la première valeur (L05) entraîne l'effacement de chacune des zones (214) du premier type (NSW) uniquement.

2. Procédé selon la revendication 1, dans lequel une intrusion est détectée quand un débuggeur est connecté au microcontrôleur et/ou quand un programme de démarrage du microcontrôleur (1) est lu à partir d'une autre source que la mémoire non volatile (2).

3. Procédé selon la revendication 1 ou 2, dans lequel le changement (40) de la valeur choisie de la troisième valeur (L1) vers la première valeur (L05) entraîne un redémarrage du microcontrôleur (1) et/ou un effacement de chaque mémoire non volatile du microcontrôleur.

4. Procédé selon l'une quelconque des revendications 1 à 3, dans lequel l'accès aux zones (214) des premier et deuxième types (NSW, SW) est interdit quand une intrusion est détectée et que la valeur choisie est la troisième valeur (L1).

5. Procédé selon l'une quelconque des revendications 1 à 4, dans lequel quand la valeur choisie est une quatrième valeur (L2), la connexion d'un débuggeur au microcontrôleur (1) est désactivée, de préférence l'exécution d'un programme de démarrage depuis une autre source que la mémoire (2) étant également désactivée.

6. Procédé selon la revendication 5, dans lequel un changement (34, 35, 36) de la valeur choisie de la première (L05), deuxième (L0) ou troisième (L1) valeur vers la quatrième valeur (L2) est irréversible.

7. Procédé selon l'une quelconque des revendications 1 à 6, dans lequel chaque accès à chacune desdites zones est d'un caractère parmi deux caractères, l'accès à la zone étant en outre conditionné par le caractère de l'accès.

8. Procédé selon la revendication 7, dans lequel une zone (214) du premier type (NSW) est accessible par un accès d'un premier ou optionnellement d'un deuxième des deux caractères, une zone du deuxième type (SW) étant accessible uniquement par un accès du deuxième caractère.

9. Procédé selon l'une quelconque des revendications 1 à 8 comprenant en outre les étapes suivantes :
- programmer pour chaque adresse vue par un microprocesseur (11) du microcontrôleur, de manière non volatile dans le microcontrôleur (1) et/ou dans un programme de démarrage du microcontrôleur, une troisième information représentative d'une catégorie choisie parmi deux catégories (SW, NSW) ; et
- conditionner l'accès à chacune desdites adresses en fonction de la valeur (RDP) choisie et de la catégorie de l'adresse, de préférence en autorisant l'accès aux adresses d'une première (SW) des deux catégories uniquement si l'accès aux zones du premier type (SW) est autorisé et l'accès aux adresses d'une deuxième (NSW) des deux catégories uniquement si l'accès aux zones du deuxième type (NSW) est autorisé.

10. Mémoire non volatile, de préférence de type flash, comprenant :
un espace de stockage non volatile (21) comportant une pluralité de zones (214) ; et
un circuit d'interface (22) configuré pour contrôler les accès en lecture, en écriture et en exécution à l'espace mémoire (21),
dans laquelle le circuit d'interface (22) est configuré pour conditionner, pour chaque zone (214), un accès à ladite zone (214) en mettant en œuvre le procédé selon l'une quelconque des revendications 1 à 8, la mémoire (2) stockant la première information et, pour chaque zone (214), la deuxième information..

11. Microcontrôleur comprenant une mémoire (2) selon la revendication 10, le microcontrôleur étant configuré pour mettre en oeuvre le procédé selon l'une quelconque des revendications 1 à 9.

## Patentansprüche

1. Ein Verfahren, das die folgenden Schritte aufweist:
- Speichern, in einem nichtflüchtigen Speicher (2) eines Mikrocontrollers (1), einer ersten Information, die für einen Wert (RDP) repräsentativ ist, der aus wenigstens vier Werten (L0, L05, L1, L2) ausgewählt ist, und, für jeden einer Vielzahl von Bereichen (214) des Speichers, einer zweiten Information, die für einen Typ repräsentativ ist, der aus zwei Typen (SW, NSW) ausgewählt ist, wobei ein Erster (NSW) der beiden Typen (SW, NSW) angibt, dass der Bereich (214) zu einer nicht sicheren Umgebung des Mikrocontrollers gehört, und ein Zweiter (SW) der beiden Typen (SW, NSW) angibt, dass der Bereich zu einer sicheren Umgebung des Mikrocontrollers gehört; und
- Bedingen des Zugriffs auf jeden der Bereiche gemäß dem ausgewählten Wert und dem Typ des Bereichs,
wobei der Zugriff auf jeden der Bereiche (214) ferner durch die Tatsache bedingt ist, dass der Zugriff durch einen mit dem Mikrocontroller (1) verbundenen Debugger initiiert wird,
wobei der Zugriff auf die Bereiche (214) des ersten Typs (NSW) autorisiert ist und der Zugriff auf die Bereiche (214) des zweiten Typs (SW) verboten ist, wenn der ausgewählte Wert ein erster Wert (L05) ist und der Zugriff durch den mit dem Mikrocontroller (1) verbundenen Debugger initiiert wird
wobei der Zugriff auf die Bereiche (214) des ersten und zweiten Typs (NSW, SW) erlaubt ist, wenn der ausgewählte Wert ein zweiter Wert (L0) ist,
wobei eine Änderung des ausgewählten Wertes von dem ersten Wert (L05) zu dem zweiten Wert (L0) verboten ist oder das Löschen von jedem der Bereiche (214) bewirkt,
wobei der Zugriff auf jeden der Bereiche (214) ferner durch ein Detektieren eines Eindringens bedingt ist, wenn der ausgewählte Wert ein dritter Wert (L1) ist, und
wobei eine Änderung (40) des ausgewählten Wertes von dem dritten Wert (L1) zu dem ersten Wert (L05) nur das Löschen von jedem der Bereiche (214) des ersten Typs (NSW) bewirkt.

2. Verfahren nach Anspruch 1, wobei ein Eindringen detektiert wird, wenn ein Debugger mit dem Mikrocontroller verbunden ist und/oder wenn ein Bootprogramm des Mikrocontrollers (1) aus einer anderen Quelle als dem nichtflüchtigen Speicher (2) gelesen wird.

3. Verfahren nach Anspruch 1 oder 2, wobei die Änderung (40) des ausgewählten Wertes von dem dritten Wert (L1) zu dem ersten Wert (L05) einen Neustart des Mikrocontrollers (1) und/oder ein Löschen jedes nichtflüchtigen Speichers des Mikrocontrollers bewirkt.

4. Verfahren nach einem der Ansprüche 1 bis 3, wobei der Zugriff auf die Bereiche (214) des ersten und zweiten Typs (NSW, SW) verboten wird, wenn ein Eindringen erkannt wird und der ausgewählte Wert der dritte Wert (L1) ist.

5. Verfahren nach einem der Ansprüche 1 bis 4, wobei, wenn der ausgewählte Wert ein vierter Wert (L2) ist, die Verbindung eines Debuggers mit dem Mikrocontroller (1) deaktiviert wird, wobei vorzugsweise auch die Ausführung eines Boot-Programms aus einer anderen Quelle als dem Speicher (2) deaktiviert wird.

6. Verfahren nach Anspruch 5, wobei eine Änderung (34, 35, 36) des ausgewählten Wertes von dem ersten (L05), zweiten (L0) oder dritten (L1) Wert auf den vierten Wert (L2) irreversibel ist.

7. Verfahren nach einem der Ansprüche 1 bis 6, wobei jeder Zugriff auf jeden der Bereiche aus einer Art aus zwei Arten besteht, wobei der Zugriff auf den Bereich ferner durch die Art des Zugriffs bedingt ist.

8. Verfahren nach Anspruch 7, wobei ein Bereich (214) des ersten Typs (NSW) durch einen Zugriff eines ersten oder optional eines zweiten der beiden Arten zugänglich ist, wobei ein Bereich des zweiten Typs (SW) nur durch einen Zugriff der zweiten Art zugänglich ist.

9. Verfahren nach einem der Ansprüche 1 bis 8, das ferner die folgenden Schritte aufweist:
- Programmieren einer dritten Information, die für eine aus zwei Kategorien (SW, NSW) ausgewählte Kategorie repräsentativ ist, für jede Adresse, die von einem Mikroprozessor (11) des Mikrocontrollers gesehen wird, nichtflüchtig im Mikrocontroller (1) und/oder in einem Mikrocontroller-Bootprogramm; und
- Bedingen des Zugriffs auf jede der Adressen gemäß dem ausgewählten Wert (RDP) und der Kategorie der Adresse, vorzugsweise durch Autorisieren des Zugriffs auf die Adressen einer Ersten (SW) der beiden Kategorien nur, wenn der Zugriff auf die Bereiche des ersten Typs (SW) autorisiert ist, und des Zugriffs auf die Adressen einer Zweiten (NSW) der beiden Kategorien nur, wenn der Zugriff auf die Bereiche des zweiten Typs (NSW) autorisiert ist.

10. Ein nichtflüchtiger Speicher, vorzugsweise vom Flash-Typ, aufweisend:
einen nichtflüchtigen Speicherraum (21), der eine Vielzahl von Bereichen (214) aufweist; und
einer Schnittstellenschaltung (22), die konfiguriert ist zum Steuern von Lese-, Schreib- und Ausführungszugriffen auf den Speicherraum (21), wobei die Schnittstellenschaltung (22) konfiguriert ist zum Bedingen, für jeden Bereich (214), eines Zugriffs auf den Bereich (214) durch Implementieren des Verfahrens nach einem der Ansprüche 1 bis 8, wobei der Speicher (2) die erste Information und für jeden Bereich (214) die zweite Information speichert.

11. Mikrocontroller, der den Speicher (2) nach Anspruch 10 aufweist, wobei der Mikrocontroller konfiguriert ist, um das Verfahren nach einem der Ansprüche 1 bis 9 zu implementieren.

## Claims

1. A method comprising the steps of:
- storing, in a non-volatile memory (2) of a microcontroller (1), a first information representative of a value (RDP) selected among at least four values (L0, L05, L1, L2), and, for each of a plurality of areas (214) of the memory, a second information representative of a type selected among two types (SW, NSW), a first one (NSW) of the two types (SW, NSW) indicating that the area (214) belongs to a non-secure environment of the microcontroller and a second one (SW) of the two types (SW, NSW) indicating that the area belongs to a secure environment of the microcontroller; and
- conditioning the access to each of said areas according to the selected value and to the type of the area,
wherein the access to each of said areas (214) is further conditioned by the fact that the access is initiated by a debugger connected to the microcontroller (1),
wherein the access to the areas (214) of the first type (NSW) is authorized and the access to the areas (214) of the second type (SW) is forbidden when the selected value is a first value (L05) and the access is initiated by the debugger connected to the microcontroller (1),
wherein the access to the areas (214) of the first and second types (NSW, SW) is authorized when the selected value is a second value (L0),
wherein a change in the selected value from the first value (L05) to the second value (L0) is forbidden or causes the deleting of each of said areas (214),
wherein the access to each of said areas (214) is further conditioned by a detection of an intrusion when the selected value is a third value (L1), and
wherein a change (40) in the selected value from the third value (L1) to the first value (L05) causes the deleting of each of the areas (214) of the first type (NSW) only.

2. The method of claim 1, wherein an intrusion is detected when a debugger is connected to the microcontroller and/or when a microcontroller (1) boot program is read from another source than the non-volatile memory (2).

3. The method of claim 1 or 2, wherein the change (40) in the selected value from the third value (L1) to the first value (L05) causes a reboot of the microcontroller (1) and/or a deleting of each non-volatile memory of the microcontroller.

4. The method of any of claims 1 to 3, wherein the access to the areas (214) of the first and second types (NSW, SW) is forbidden when an intrusion is detected and the selected value is the third value (L1).

5. The method of any of claims 1 to 4, wherein when the selected value is a fourth value (L2), the connection of a debugger to the microcontroller (1) is deactivated, preferably the execution of a boot program from another source than the memory (2) being also deactivated.

6. The method of claim 5, wherein a change (34, 35, 36) in the selected value from the first (L05), second (L0), or third (L1) value to the fourth value (L2) is irreversible.

7. The method of any of claims 1 to 6, wherein each access to each of said areas is of one character among two characters, the access to the area being further conditioned by the character of the access.

8. The method of claim 7, wherein an area (214) of the first type (NSW) is accessible by an access of a first or optionally of a second one of the two characters, an area of the second type (SW) being accessible only by an access of the second character.

9. The method of any of claims 1 to 8, further comprising the following steps of:
- programming, for each address seen by a microprocessor (11) of the microcontroller, non-volatilely in the microcontroller (1) and/or in a microcontroller boot program, a third information representative of a category selected among two categories (SW, NSW); and
- conditioning the access to each of said addresses according to the selected value (RDP) and to the category of the address, preferably by authorizing the access to the addresses of a first one (SW) of the two categories only if the access to the areas of the first type (SW) is authorized and the access to the addresses of a second one (NSW) of the two categories only if the access to the areas of the second type (NSW) is authorized.

10. A non-volatile memory, preferably of flash type, comprising:
a non-volatile storage space (21) comprising a plurality of areas (214); and
an interface circuit (22) configured to control the read, write and execution accesses to the memory space (21),
wherein the interface circuit (22) is configured to conditionate, for each area (214), an access to said area (214) by implementing the method according to any of claims 1 to 8, the memory (2) storing the first information, and, for each area (214), the second information.

11. A microcontroller comprising the memory (2) of claim 10, the microcontroller being configured to implement the method of any of claims 1 to 9.
